# EUROPÄISCHE PATENTSCHRIFT

(11) **EP 3 824 994 B1**
(45) Veröffentlichungstag und Bekanntmachung des Hinweises auf die Patenterteilung: **19.02.2025**
(21) Anmeldenummer: 19209941.4
(22) Anmeldetag: 19.11.2019
(51) Int. Cl.: B01F 25/10

(54) **VORRICHTUNG ZUR DESINFEKTION EINER FLÜSSIGKEIT**
DEVICE FOR DISINFECTING A LIQUID
DISPOSITIF DE DESINFECTION D'UN LIQUIDE

(43) Veröffentlichungstag der Anmeldung: 26.05.2021
(73) Patentinhaber: RF-Tec GmbH, 85232 Bergkirchen (DE)
(72) Erfinder: HECHTL, Christian, 82346 Andechs (DE)
(74) Vertreter: Grünecker Patent- und Rechtsanwälte PartG mbB

(56) Entgegenhaltungen:
- AT-U1- 12 050
- CN-A- 103 539 236
- CN-U- 202 236 475
- DE-A1- 102008 046 889
- DE-A1- 4 335 483
- KR-A- 20020 048 581
- US-A1- 2014 069 510
- US-A1- 2018 297 868

## Beschreibung

### Gebiet der Erfindung

Die vorliegende Erfindung betrifft eine Vorrichtung zur Desinfektion einer Flüssigkeit mit einer rotationssymmetrischen Reaktionskammer und die Desinfektion einer Flüssigkeit, wie beispielsweise Wasser, während des Durchströmens durch die Vorrichtung.

### Stand der Technik

Flüssigkeiten, die für die Aufnahme durch Menschen oder Tiere bestimmt sind, erfordern typischer Weise eine Behandlung. Solche Flüssigkeiten sind zu desinfizieren. Insbesondere bei Wasser muss sichergestellt werden, dass es vor dem Genuss oder einer anderen Verwendung, wie beispielsweise zur Körperpflege, hinreichend entkeimt ist. Zu den zu bekämpfenden Keimen zählen insbesondere Legionellen. Im Stand der Technik sind thermische, chemische und elektrochemische Desinfektionsverfahren zur Reduktion der Anzahl an Keimen, wie beispielsweise Legionellen, bekannt, Die bekannten Verfahren sind jedoch kostenintensiv und/oder baulich aufwändig und garantieren keine nachhaltige hinreichende Reduktion von Keimen im Trinkwasser.

In der US 2014/0069510 A1 wird eine Vorrichtung zur Erzeugung von Wirbeln in einer Flüssigkeit beschrieben, die Zuläufe im Kopfbereich und einen Ablauf im Bodenbereich und einen sich zwischen diesen Bereichen verjüngenden Körper aufweist. Insbesondere kann die Vorrichtung zur Abtötung von Bakterien verwendet werden.

In der KR 2002 0048581 A wird eine Vorrichtung zur Aufbereitung von Wasser beschrieben, die zwei Zuleitungen in einem trichterförmigen Kopfbereich, der sich in einen Ausflussbereich verjüngt, aufweist.

In der CN 103 539 236 A wird eine Vorrichtung zur Behandlung einer Flüssigkeit mit einer rotationssymmetrischen Reaktionskammer, in der eine Verwirbelung der Flüssigkeit erzeugt wird, beschrieben.

In der AT 12 050 U1 wird eine Wassermischkammer zur Mischung kalten und warmen Wassers in Ovoidform oder in Form eines hyperbolischen Trichters beschrieben.

In der US 2018/0297868 A1 wird eine Elektroflotationsvorrichtung zur Trennung in Schmutzwasser suspendierter Partikel mit einem Auslass in Form eines abgeschnittenen parabolischen oder hyperbolischen Kegels beschrieben.

In der DE 10 2008 046889 A1 wird ein hyperbolischer Trichter zur Bindung von Gasen in Wasser beschrieben.

in der DE 4 335 483 A1 wird In der D7 wird eine Spiralwirbelvorrichtung zur Mischung einer Flüssigkeit mit einer anderen, einem Gas oder einem Feststoff beschrieben, die einen rotationssymmetrischen Innenbehälter und einen rotationssymmetrischen Außenbehälter aufweist.

In der CN 202 236 475 U wird eine Medikamentensuspensions- und Medikamentenverabreichungsvorrichtung beschrieben.

Aus der DE 10 2006 045 773 A1 ist ein Wasseraufbereitungssystem bekannt, das einen Reaktionstank und eine damit verbundene Kavitatoreinrichtung aufweist. Wasser wird aus dem Reaktionstank in die Kavitatoreinrichtung geleitet, die strömungstechnisch derart ausgebildet ist, dass relativ große Druckunterschiede in dem durchströmenden Wasser derart auftreten, dass sich Hohlräume in dem Wasser bilden, die mit zuvor in dem Fluid gelösten Gaskomponenten, wie insbesondere Sauerstoff und Kohlendioxid, gefüllt werden. Diese Kavitation entzieht dem Wasser also Nährstoffe für die Keime. Das so behandelte Wasser wird in den Reaktionstank zurückgeleitet, der für eine hohe Abscheiderate der Gaskomponenten ausgebildet ist, sodass ein für Keime nährstoffarmes Wasser bereitgestellt wird. Der Gesamtaufbau des Systems ist jedoch sehr komplex, und es ist fraglich, ob durch die aufgrund der Kavitation erreichte Nährstoffarmut allein eine hinreichende Keimreduktion erreicht werden kann.

Aus der EP 1 294 474 B1 ist eine Vorrichtung zur physikalisch-chemischen Behandlung von Flüssigkeiten bekannt, in deren Hohlraum eine nach unten gerichtete zyklonische Strömung einer eingeleiteten Flüssigkeit erzeugt wird, in der chemische Reaktionen verstärkt werden und eine mechanische Zerstörung von Mikroorganismen erreicht werden kann. Durch ein vertikales Aufstiegsrohr wird die Strömung nach oben umgeleitet und oben aus dem Hohlraum ausgeleitet. Die Konstruktion der Vorrichtung ist relativ aufwändig und die Ausbildung der zyklonischen Strömung und somit Effizienz der Keimreduktion kann problematisch sein.

Es liegt somit der vorliegenden Erfindung eine Aufgabe dahingehend zugrunde, eine Vorrichtung zur Desinfektion einer Flüssigkeit, insbesondere zur Desinfektion von Wasser, bereitzustellen, in der die oben genannten Probleme des Stands der Technik überwunden oder zumindest gemildert werden.

### Beschreibung der Erfindung

Die oben genannte Aufgabe wird durch Bereitstellen einer Vorrichtung zur Desinfektion einer Flüssigkeit, beispielsweise Wasser, gemäß Patentanspruch 1 gelöst. Diese Vorrichtung umfasst eine um ihre Längsachse rotationssymmetrische Reaktionskammer mit einem Kopfbereich (oberen Bereich) und einem (gegenüberliegenden) Bodenbereich (unteren Bereich) und einem Zwischenbereich zwischen dem Kopfbereich und dem Bodenbereich;

einen ersten Zulauf, der in dem Kopfbereich mit der Reaktionskammer zum Einleiten einer ersten Komponente (eines ersten Anteils) der Flüssigkeit in die Reaktionskammer verbunden ist und einen zweiten Zulauf, der in dem Kopfbereich mit der Reaktionskammer zum Einleiten einer zweiten von der ersten Komponente verschiedenen Komponente (eines zweiten Anteils) der Flüssigkeit in die Reaktionskammer verbunden ist; und
einen Ablauf, der in dem Bodenbereich mit der Reaktionskammer zum Ausleiten der Flüssigkeit (nach unten) aus der Reaktionskammer verbunden ist;
wobei der erste Zulauf und der zweite Zulauf so angeordnet sind und die Reaktionskammer so (geometrisch) ausgebildet ist, dass eine dreidimensionale (turbulente) Wirbelströmung in der Flüssigkeit innerhalb der Reaktionskammer über einen Großteil des Volumens der Reaktionskammer, beispielsweise mindestens 50 % oder 60 % des Volumens (des Hohlraums) der Reaktionskammer, erzeugt wird. Der Radius der rotationssymmetrischen Reaktionskammer ändert sich erfindungsgemäß in dem Zwischenbereich gemäß einer Klothoide .

In einer solchen dreidimensionalen Wirbelströmung werden in der Flüssigkeit vorhandene Keime durch die in der Strömung wirkenden mechanischen Kräfte zuverlässig zerstört. Auch kann lokal Kavitation auftreten, die zur Reduktion der Anzahl von Mikroorganismen beitragen kann.

Weiterhin können durch die dreidimensionale Wirbelströmung gewünschte chemische Reaktionen, wie Oxidation und Reduktion, verstärkt werden, wobei chemische Reaktionsstoffe zusätzlich der Reaktionskammer über eine entsprechende Zuleitung zugeführt werden können oder bereits mit der eingeleiteten Flüssigkeit mittransportiert werden. Die Behandlung der Flüssigkeit in der Vorrichtung kann auch zu einer lokalen Änderung der Viskosität und/oder Oberflächenspannung der Flüssigkeit führen.

Die dreidimensionale Wirbelströmung hat eine makroskopische Geschwindigkeitskomponente, die vom Kopfbereich der Reaktionskammer zum Bodenbereich hin, also von oben nach unten, gerichtet ist. Im Betrieb wird die Vorrichtung und somit die Reaktionskammer im Allgemeinen senkrecht zu einem Installationsboden ausgerichtet sein (auch wenn die Erfindung nicht darauf beschränkt ist) und so werden hier und im Weiteren mit den Begriffen "oben" beziehungsweise "unten" Positionen angegeben, die weiter beziehungsweise näher an dem Gravitationszentrum der Erde angeordnet sind. Insbesondere ist "oben" dem Kopfbereich der Reaktionskammer näher als "unten".

Die dreidimensionale Wirbelströmung kann sich in der erfindungsgemäßen Vorrichtung sehr stark ausbilden, und über den Auslauf kann die Flüssigkeit die Reaktionskammer frei und ohne wesentliche Umlenkung (insbesondere ohne wesentliche Umlenkung in Richtung des Kopfbereichs) verlassen. Keine zusätzlichen Umwälzpumpen oder ähnliches sind zur Erzeugung der dreidimensionalen Wirbelströmung nötig (freilich können Pumpen zum Liefern der Flüssigkeit zu dem ersten und zweiten Zulauf hin vorgesehen sein).

Der erste und der zweite Zulauf können durch die Mantelfläche der um ihre Längsachse rotationssymmetrisch ausgebildeten Reaktionskammer geführt sein, oder sie können durch die Stirnfläche (den Deckel) im Kopfbereich der Reaktionskammer geführt sein oder mit einem durch die Stirnfläche im Kopfbereich geführten gemeinsamen Zufluss verbunden sein. Insbesondere können der erste und der zweite Zulauf als Zweige eines gemeinsamen Zulaufs ausgebildet sein.

Der Kopfbereich der Reaktionskammer kann überall einen größeren Radius als den größten Radius des Zwischenbereichs aufweisen. Insbesondere ist die Form der Reaktionskammer nicht herzförmig ausgebildet. Der Kopfbereich kann in seinem oberen Bereich einen nach außen hin konkaven Bereich (sodass er sich in diesem Bereich in den Hohlraum der Reaktionskammer hinein erstreckt) oder flachen Bereich aufweisen. Der Kopfbereich kann also in seinem oberen, den Zwischenbereich der Reaktionskammer gegenüberliegenden Bereich, abgeflacht vorgesehen sein. Erfindungsgemäß ändert sich der Zwischenbereich der Reaktionskammer gemäß einer Klothoide. Das bedeutet, dass die Projektion der Mantelfläche der Reaktionskammer auf eine Ebene senkrecht zur Querschnittsfläche in diesem Zwischenbereich eine Kurve darstellt, deren Krümmung K mit der Bogenlänge L (von einem festen Ausgangspunkt der Kurve zu dem jeweils betrachteten Kurvenpunkt) zunimmt: K = 1/R = L / A² mit dem Krümmungsradius R und dem Klothoidenparameter A. Die Mantelfläche weist also in dem Zwischenbereich eine solche Kurve auf, sodass sich der Radius der Reaktionskammer in diesem Bereich gemäß einer Klothoide ändert.

Weiterhin ändert sich gemäß einer weiteren Weiterbildung der Radius im Bodenbereich der Reaktionskammer (und gegebenenfalls im Gegensatz zu dem Zwischenbereich) nicht gemäß einer Klothoide. Beispielsweise kann sich der Radius in dem Bodenbereich asymptotisch einer zur Längsachse parallelen Achse annähern.

Experimente und numerische Berechnungen haben ergeben, dass die oben genannten geometrischen Merkmale der Reaktionskammer die Ausbildung einer starken dreidimensionalen Wirbelströmung fördern.

Gemäß einer Weiterbildung der Vorrichtung weist in den oben beschriebenen Beispielen der erste Zulauf eine erste Zulaufmündung innerhalb der Reaktionskammer in einer ersten Ebene senkrecht zur Längsachse der Reaktionskammer auf, und es weist der zweite Zulauf eine zweite Zulaufmündung innerhalb der Reaktionskammer in der ersten Ebene oder in einer zweiten von der ersten Ebene verschiedenen Ebene senkrecht zur Längsachse der Reaktionskammer auf (die erste und zweite Ebene umfassen also jeweils eine Querschnittsfläche der Reaktionskammer). Die Flüssigkeit tritt aus den Zulaufmündungen in die Reaktionskammer ein, wobei die Zulaufmündungen Düsen aufweisen können oder als Düsen ausgebildet sein können.

Die Zulaufmündungen sind derart ausgerichtet, dass die Flüssigkeit im Wesentlichen in Richtung der Mantelfläche der Reaktionskammer in die Reaktionskammer eintritt. Die Zulaufmündungen können hierbei um einige Grad (beispielsweise 1 bis 10 Grad) aus der horizontalen Ebene (Querschnittsfläche der Reaktionskammer) hinaus in Richtung des Ablaufs gerichtet sein. Gemäß einem Beispiel ist die oben genannte erste Ebene und/oder zweite Ebene in einem Bereich des größten Radius der Reaktionskammer ausgebildet. So kann die erste oder zweite Ebene diejenige Querschnittsfläche der Reaktorkammer umfassen, bei der der Radius der Reaktorkammer am größten ist.

Hierbei kann die erste Zulaufmündung von der Mantelfläche der Reaktionskammer um mehr als ein 1/20 oder 1/10 oder 1/5 des Radius der Reaktionskammer in der ersten Ebene beabstandet sein, und es kann die zweite Zulaufmündung von der Mantelfläche der Reaktionskammer um mehr als ein 1/20 oder 1/10 oder 1/5 des Radius der Reaktionskammer in der ersten oder zweiten Ebene beabstandet sein. Der Zulauf erfolgt hier also insbesondere nicht direkt tangential zur Innenfläche des Mantels der Reaktionskammer. So können im Vergleich zur tangentialen Zuleitung der Flüssigkeit höhere Geschwindigkeiten und Verwirbelungen erzielt werden. Auch hierdurch wird die Ausbildung einer dreidimensionalen Wirbelströmung in der zu behandelnden Flüssigkeit verstärkt. Zu einer solchen Verstärkung kann auch dienen, die zweite Zulaufmündung in einer Richtung anzuordnen, die der Richtung der ersten Zulaufmündung entgegengesetzt ist, sodass die Flüssigkeit in zwei entgegengesetzte Richtungen jeweils zu der Mantelfläche der Reaktionskammer hin in die Reaktionskammer eintritt.

Gemäß einer Weiterbildung umfasst die Reaktionskammer einen dritten und einen vierten Zulauf, wobei der dritte Zulauf eine dritte Zulaufmündung innerhalb der Reaktionskammer in einer dritten Ebene senkrecht zur Längsachse der Reaktionskammer aufweist und der vierte Zulauf eine vierte Zulaufmündung innerhalb der Reaktionskammer in der dritten Ebene oder in einer vierten von der dritten Ebene verschiedenen Ebene senkrecht zur Längsachse der Reaktionskammer aufweist. Die dritte und/oder vierte Ebene können der oben genannten ersten oder zweiten Ebene gleich oder davon verschieden sein.

Die Flüssigkeit tritt gemäß dieser Weiterbildung auch aus den dritten und vierten Zulaufmündungen (in Form einer dritten und vierten Komponente derselben) in die Reaktionskammer ein, wobei auch die dritten und vierten Zulaufmündungen Düsen aufweisen können oder als Düsen ausgebildet sein können. Auch die dritten und vierten Zulaufmündungen sind derart ausgerichtet, dass die Flüssigkeit im Wesentlichen in Richtung der Mantelfläche der Reaktionskammer in die Reaktionskammer eintritt. Auch die dritten und vierten Zulaufmündungen können hierbei um einige Grad (beispielsweise 1 bis 10 Grad) aus der horizontalen Ebene hinaus in Richtung des Ablaufs gerichtet sein. Gemäß einem Beispiel ist die oben genannte dritte Ebene und/oder vierte Ebene in einem Bereich des größten Radius der Reaktionskammer ausgebildet.

Hierbei kann die dritte Zulaufmündung von der Mantelfläche der Reaktionskammer um mehr als ein 1/20 oder 1/10 oder 1/5 des Radius der Reaktionskammer in der dritten Ebene beabstandet sein, und es kann die vierte Zulaufmündung von der Mantelfläche der Reaktionskammer um mehr als ein 1/20 oder 1/10 oder 1/5 des Radius der Reaktionskammer in der vierten Ebene beabstandet sein. Auch hierdurch wird die Ausbildung einer dreidimensionalen Wirbelströmung in der zu behandelnden Flüssigkeit verstärkt. Zu einer solchen Verstärkung kann auch dienen, die vierte Zulaufmündung in einer Richtung anzuordnen, die der Richtung der dritten Zulaufmündung entgegengesetzt ist, sodass die Flüssigkeit in zwei entgegengesetzte Richtungen zu der Mantelfläche der Reaktionskammer hin in die Reaktionskammer eintritt.

Der dritte Zulauf kann in Umfangsrichtung der Reaktionskammer zwischen dem ersten und zweiten Zulauf angeordnet sein, und es kann der vierte Zulauf in Umfangsrichtung der Reaktionskammer zwischen dem ersten und zweiten Zulauf angeordnet sein. Insbesondere können in dieser Weiterbildung, der die so angeordneten vier Zuläufe umfasst, die jeweiligen Richtungen benachbarter Zulaufmündungen um jeweils 90° zueinander versetzt sein. Außerdem können der dritte und der vierte Zulauf als weitere Zweige eines dem ersten und zweiten Zulauf gemeinsamen Zuflusses ausgebildet sein. Der erste und zweite Zulauf können hierbei mit dem gemeinsamen Zufluss verbunden sein, der durch die Stirnfläche der Reaktionskammer im Kopfbereich geführt sein kann, und der dritte und vierte Zulauf können durch die Mantelfläche der Reaktionskammer geführt sein.

Der erste, zweite, dritte und vierte Zulauf können durch die Mantelfläche der Reaktionskammer geführt sein.

Zumindest einige der in den oben und im Folgenden beschriebenen Beispielen genannten Zuläufe können in Form von Öffnungen/Bohrungen ("Intakes") durch den Mantel der Reaktionskammer hindurch ausgebildet sein. Das Profil der Öffnungen/Bohrungen kann dabei so ausgebildet sein, dass die Flüssigkeit durch diese nicht tangential zur Mantelfläche in die Reaktionskammer eintritt. So kann das Profil beispielsweise entsprechend unsymmetrisch (nicht rotationssymmetrisch) bezüglich die Längsachse der Öffnungen/Bohrungen ausgebildet sein.

Gemäß einer weiteren Weiterbildung sind beispielsweise der erste, zweite, dritte und vierte Zulauf durch die Mantelfläche der Reaktionskammer geführt, und es weist die Reaktionskammer einen fünften und sechsten Zulauf auf, wobei der fünfte und sechste Zulauf mit einem Zufluss verbunden sind, der durch die Stirnfläche der Reaktionskammer im Kopfbereich geführt ist.

Der fünfte Zulauf weist eine fünfte Zulaufmündung innerhalb der Reaktionskammer in einer fünften Ebene senkrecht zur Längsachse der Reaktionskammer auf und der sechste Zulauf weist eine sechste Zulaufmündung innerhalb der Reaktionskammer in der fünften Ebene oder in einer sechsten von der fünften Ebene verschiedenen Ebene senkrecht zur Längsachse der Reaktionskammer auf. Die fünfte und/oder sechste Ebene können von der oben genannten ersten und/oder zweiten Ebene verschieden und insbesondere näher an dem Bodenbereich der Reaktionskammer als die erste und/oder zweite Ebene sein.

Die Flüssigkeit tritt gemäß dieser Weiterbildung auch aus den fünften und sechsten Zulaufmündungen in die Reaktionskammer ein, wobei auch die fünften und sechsten Zulaufmündungen Düsen aufweisen können oder als Düsen ausgebildet sein können. Auch die fünften und sechsten Zulaufmündungen sind derart ausgerichtet, dass die Flüssigkeit im Wesentlichen in Richtung der Mantelfläche der Reaktionskammer in die Reaktionskammer eintritt. Auch die fünften und sechsten Zulaufmündungen können hierbei um einige Grad aus der horizontalen Ebene hinaus in Richtung des Ablaufs gerichtet sein. Gemäß einem Beispiel ist auch die oben genannte fünfte Ebene und/oder sechste Ebene in einem Bereich des größten Radius der Reaktionskammer ausgebildet.

Hierbei kann die fünfte Zulaufmündung von der Mantelfläche der Reaktionskammer um mehr als ein 1/20 oder 1/10 oder 1/5 des Radius der Reaktionskammer in der der fünften Ebene beabstandet sein, und es kann die sechste Zulaufmündung von der Mantelfläche der Reaktionskammer um mehr als ein 1/20 oder 1/10 oder 1/5 des Radius der Reaktionskammer in der der sechsten Ebene beabstandet sein. Auch hierdurch wird die Ausbildung einer dreidimensionalen Wirbelströmung in der zu behandelnden Flüssigkeit verstärkt. Zu einer solchen Verstärkung kann auch dienen, die sechste Zulaufmündung in einer Richtung anzuordnen, die der Richtung der fünften Zulaufmündung entgegengesetzt ist, sodass die Flüssigkeit in zwei entgegengesetzte Richtungen zu der Mantelfläche der Reaktionskammer hin in die Reaktionskammer eintritt.

Zumindest einige in den oben beschriebenen Beispielen genannten Zuläufe, insbesondere die durch den Mantel der Reaktionskammer führenden Zuläufe können mit Ventilen ausgestattet sein, mithilfe derer das Einströmen der Flüssigkeit in die Reaktionskammer geregelt oder gesteuert werden kann.

Weiterhin ist es bei sämtlichen oben beschriebenen Beispielen der erfindungsgemäßen Vorrichtung nicht notwendig, irgendwelche zusätzlichen Umlenkungsmittel (Einbauten) zum Umlenken der Flüssigkeit innerhalb der Reaktionskammer, insbesondere Einrichtungen zum Umlenken der Flüssigkeit vom Bodenbereich der Reaktionskammer in Richtung zu dem Kopfbereich der Reaktionskammer hin, vorzusehen. Vielmehr wird ein relativ freier Abfluss der Flüssigkeit aus der Reaktionskammer heraus durch den Ablauf nach unten hin erlaubt. Hierdurch ist ein geringerer Staudruck innerhalb der Reaktionskammer zur Ausbildung der gewünschten Strömungscharakteristik aufzubauen, als wenn derartige Umlenkungsmittel und ein Ausleiten der Flüssigkeit aus dem Kopfbereich der Reaktionskammer vorgesehen werden würden.

Es wird hierin auch ein Verfahren zur Desinfektion einer Flüssigkeit (beispielsweise Wasser) gemäß Patentanspruch 12 bereitgestellt. Das Verfahren umfasst die Schritte:
Bereitstellen einer Vorrichtung gemäß einem der vorhergehenden Patentansprüche;
Einleiten der Flüssigkeit in die bereitgestellte Vorrichtung;
Durchleiten der Flüssigkeit durch die bereitgestellte Vorrichtung und Ausbilden einer dreidimensionalen Wirbelströmung in der Flüssigkeit innerhalb der Reaktionskammer; und
Ausleiten der Flüssigkeit aus der bereitgestellten Vorrichtung.

Eine Desinfektion kann durch die Zerstörung von Mikroorganismen, wie beispielsweise Legionellen, in der dreidimensionalen Wirbelströmung erfolgen. Die Behandlung der Flüssigkeit in der Vorrichtung kann auch zu einer lokalen Änderung der Viskosität und/oder Oberflächenspannung der Flüssigkeit und zur Verstärkung chemischer Aktivitäten (beispielsweise nach Zufügung zusätzlicher chemischer Reaktionsstoffe) führen. Die Behandlung der Flüssigkeit kann in der Reaktionskammer wiederholt erfolgen. So kann das genannte Verfahren weiterhin ein wiederholtes Einleiten der aus der bereitgestellten Vorrichtung ausgeleiteten Flüssigkeit in die bereitgestellte Vorrichtung umfassen.

Mit dem genannten Verfahren können insbesondere Legionellen in Wasser (beispielsweise Trinkwasser oder Brauchwasser) abgetötet werden. So kann das Verfahren eines der oben beschriebenen Beispiele weiterhin das Anschließen der bereitgestellten Vorrichtung an ein Trinkwasser- oder Brauchwassernetz zum Einleiten der Flüssigkeit in die bereitgestellte Vorrichtung umfassen, wobei die Desinfektion insbesondere die Reduktion der Anzahl von in dem Wasser enthaltenen Legionellen umfassen kann. Das Wasser kann über an das Trinkwasser- oder Brauchwassernetz angebundene Pumpen zur Vorrichtung geliefert werden. Insbesondere kann die Vorrichtung in die Warmwasserzirkulation eines Gebäudes eingebaut sein.

Im Folgenden werden Ausführungsformen einer erfindungsgemäßen Vorrichtung unter Bezugnahme auf die Zeichnung beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.
Figur 1 veranschaulicht im Längsschnitt eine Vorrichtung zum Behandeln einer Flüssigkeit mit einer rotationssymmetrischen Reaktionskammer gemäß einer Ausführungsform der vorliegenden Erfindung.
Figur 2 zeigt einen Querschnitt der in Figur 1 gezeigten Vorrichtung.
Figur 3 veranschaulicht im Längsschnitt eine Vorrichtung zum Behandeln einer Flüssigkeit mit einer rotationssymmetrischen Reaktionskammer gemäß einer weiteren Ausführungsform der vorliegenden Erfindung.
Figur 4 zeigt einen Querschnitt einer Vorrichtung gemäß einer Ausführungsform der vorliegenden Erfindung.

Es wird hierin eine Vorrichtung zur Desinfektion einer Flüssigkeit bereitgestellt. Die Flüssigkeit, insbesondere Wasser, wird in der Vorrichtung desinfiziert. Die Desinfektion erfolgt durch Zerstörung von Mikroorganismen, insbesondere von Legionellen, in der in der Reaktionskammer der Vorrichtung auftretenden dreidimensionalen Wirbelströmung, die insbesondere eine endliche Wirbelstärke ω = rot v mit dem Geschwindigkeitsfeld v der Flüssigkeit aufweisen kann. Die Wirbelströmung weist Geschwindigkeitskomponenten in alle drei Richtungen des kartesischen Koordinatensystems auf. Im Allgemeinen wird die Wirbelströmung hochturbulente Anteile aufweisen. In dieser Wirbelströmung werden die Mikroorganismen beispielsweise aufgrund der auftretenden Schub- und Scherkräfte/-spannungen und Druckunterschiede zerstört. Beispielsweise können sich turbulente Grenzschichten mit großen Geschwindigkeitsgradienten ausbilden, in denen Mikroorganismen zerstört werden können. Auch kann lokal in der Reaktionskammer Kavitation auftreten, die zur Reduktion der Anzahl von Mikroorganismen beitragen kann.

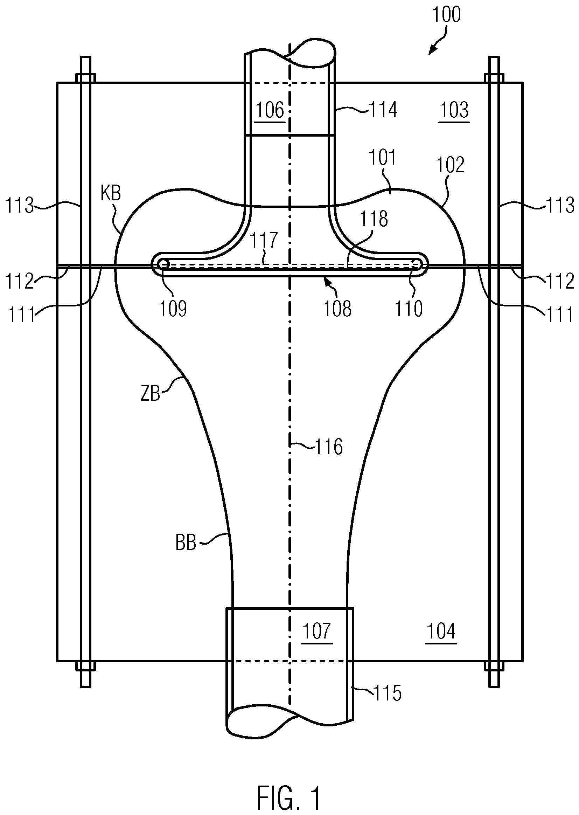

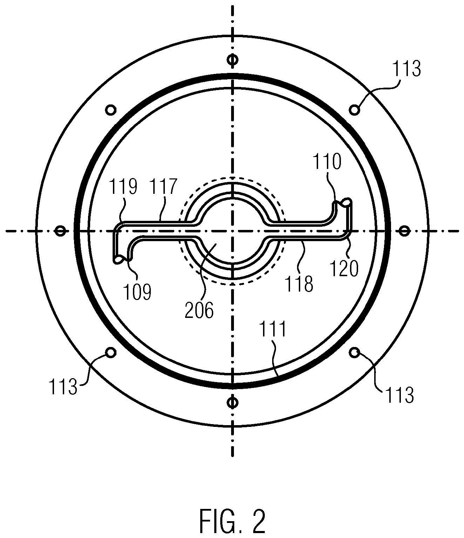

Eine Ausführungsform der vorliegenden Erfindung ist in den Figuren 1 und 2 veranschaulicht. Die gezeigte Vorrichtung 100 zur Desinfektion einer Flüssigkeit umfasst eine um ihre Längsachse 116 rotationssymmetrische Reaktionskammer 101 mit einer Mantelfläche 102. In dem gezeigten Beispiel wird die Reaktionskammer 101 als Hohlraum mithilfe eines oberen Bauteils 103 und eines unteren Bauteils 104 ausgebildet. Das obere und untere Bauteil (103, 104) können eine äußere zylindrische Form aufweisen und können beispielsweise gefräste Edelstahlbauteile sein. Zwischen dem oberen Bauteil 103 und dem unteren Bauteil 104 sind eine innere Dichtungsnut 111, beispielsweise mit einem Dichtungsring, und eine äußere Dichtungsnut 112, ebenfalls beispielsweise mit einem Dichtungsring, vorgesehen. Das obere Bauteil 103 und das untere Bauteil 104 können über Spannschrauben 113 zusammengefügt und zusammengehalten werden.

Ein Zufluss 106 mit einem Rohranschluss 114 ist mit dem Kopfbereich KB der Reaktionskammer 101 verbunden und wird axial in die Reaktionskammer 101 geführt. Im Bodenbereich BB der Reaktionskammer 101 ist ein Ablauf 107 mit einem Rohranschluss 115 vorgesehen. Über eine Aufteilung 108 des Zuflusses 106 gelangt eine zu behandelnde Flüssigkeit in einen ersten Zulauf 117 und einen zweiten Zulauf 118. Der erste Zulauf 117 weist eine erste Zulaufmündung 109 auf, und der zweite Zulauf 118 weist eine zweite Zulaufmündung 110 auf. Die erste und zweite Zulaufmündung 109, 110 können als Düsen ausgebildet sein oder Düsen umfassen.

Wie es aus Figur 2, die einen Querschnitt der in Figur 1 gezeigten Konfiguration darstellt, ersichtlich ist, sind die Zuläufe 117 und 118 so ausgerichtet, dass sie die zu behandelnde Flüssigkeit radial beabstandet von der Mantelfläche 102 der Reaktionskammer 101 in entgegengesetzte Richtungen zu der Mantelfläche hin 102 ausgeben. Die Zuläufe 117 und 118 beziehungsweise deren Zulaufmündungen 109, 110 können hierbei in derselben horizontalen Ebene senkrecht zur Längsachse 116 oder auf unterschiedlichen horizontalen Ebene angeordnet sein. Weiterhin können die Zulaufmündungen 109, 110 um ein paar Grad nach unten in Richtung des Bodenbereichs BB geneigt sein.

Wie es aus Figur 1 ersichtlich ist, weist die Reaktionskammer 101 einen sich entlang der Längsachse 116 ändernden Radius auf. Im Kopfbereich KB ist der Radius größer als im Bodenbereich BB und einem zwischen dem Kopfbereich KB und dem Bodenbereich BB angeordneten Zwischenbereich ZB. Nach oben hin, d.h. zum Zufluss 106 hin, ist der Kopfbereich KB abgeflacht. Die Zuläufe 117 und 118 beziehungsweise deren Zulaufmündungen 109, 110 können in einem Bereich beziehungsweise einer Ebene des maximalen Radius angeordnet sein. Im Bodenbereich BB kann sich der Radius asymptotisch einer zur Längsachse 116 parallelen Geraden annähern.

Im Zwischenbereich ZB umfasst die Mantelfläche 102 zumindest bereichsweise eine Kurve, die der Klothoidengleichung genügt (d.h. dass ihre Krümmung K mit der Bogenlänge L von einem festen Ausgangspunkt der Kurve zu dem jeweils betrachteten Kurvenpunkt nach K = 1/R = L / A² mit dem Krümmungsradius R und dem Klothoidenparameter A zunimmt), sodass sich der Radius hier in Richtung zu dem Ablauf 107 hin abnehmend gemäß einer Klothoide ändert.

Durch eine Kombination der Anordnung der Zuläufe 117 und 118 beziehungsweise deren Zulaufmündungen 109, 110 im Kopfbereich KB und der geometrischen Ausgestaltung der Reaktionskammer 101 kann eine dreidimensionale Wirbelströmung in einem Großteil des Volumens der Reaktionskammer 101 ausgebildet werden, in der insbesondere Mikroorganismen, wie Legionellen, zuverlässig zerstört werden können. Die Wirbelströmung kann die Reaktionskammer 101 frei durch den Ablauf 107 verlassen.

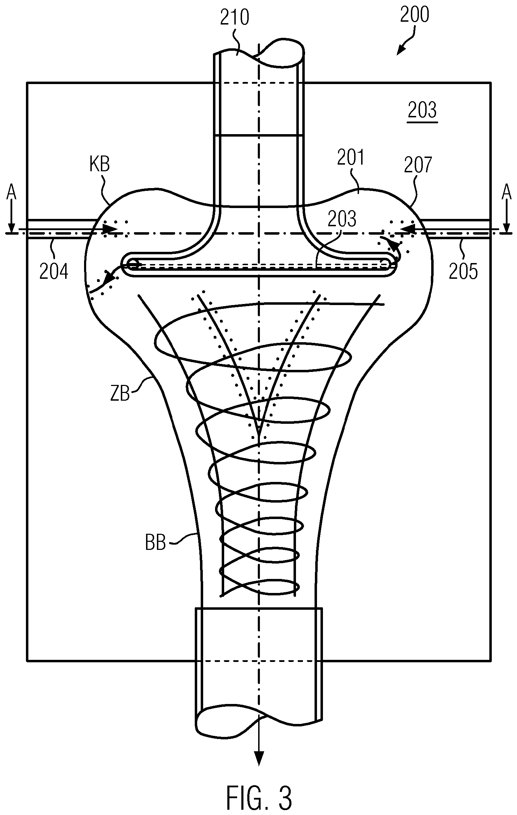

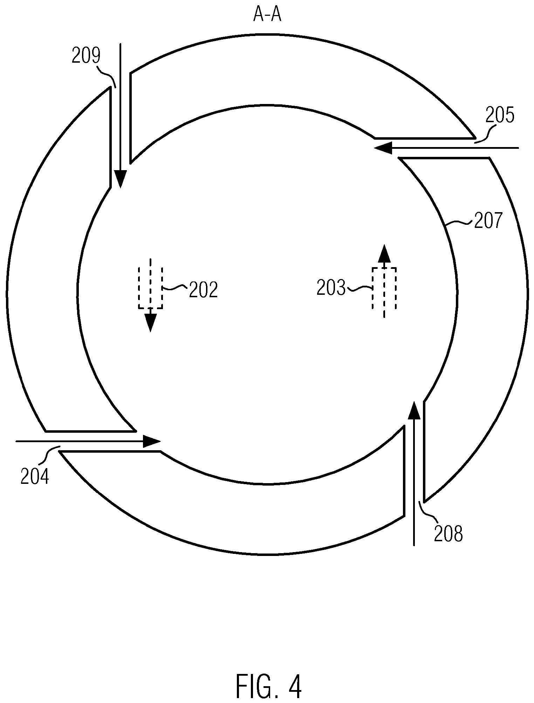

Weitere Ausführungsform sind beispielhaft in den Figuren 3 und 4 gezeigt. Die Konstruktionen der in den Figuren 3 und 4 gezeigten Vorrichtung 200 zur Desinfektion einer Flüssigkeit sind im Vergleich zu der in den Figuren 1 und 2 gezeigten Konfiguration komplexer, sie können aber eine noch effizientere Ausbildung einer dreidimensionalen Wirbelströmung mit noch stärkeren auf Mikroorganismen wirkenden Kräften ermöglichen.

Auch die in Figur 3 gezeigte Ausführungsform weist in einem Kopfbereich KB einer Reaktionskammer 201 einen Zufluss 210 auf, der sich in zwei Zuläufe 202 und 203 verzweigt. Selbstverständlich kann die geometrische Form des Kopfbereichs KB von der in den Figuren 1 und 3 gezeigten Form abweichen. Die Mantelfläche der Reaktionskammer 201 ist mit 207 bezeichnet. Die Radien des Zwischenbereichs ZB und des sich daran nach unten anschließenden Bodenbereichs BB sind kleiner als sämtliche Radien des Kopfbereichs KB.

Die einströmende Flüssigkeit ist in Figur 3 durch Pfeile angezeigt. Punkte markieren Gebiete innerhalb der Reaktionskammer, in denen (verstärkt) Kavitation auftreten kann, in der Mikroorganismen zerstört werden können. Ebenfalls sind Wirbellinien gezeigt, die sich in der Flüssigkeit innerhalb der Reaktionskammer ausbilden können.

Gemäß verschiedener Varianten können zwei weitere Zuläufe 204, 205 oder vier weitere Zuläufe 204, 205, 208, 209 (siehe Figur 4; in Figur 3 sind lediglich die Zuläufe 204 und 205 gezeigt) durch die Mantelfläche 207 der Reaktionskammer 201 geführt werden. Diese Zuläufe 204, 205, 208, 209 können als Öffnungen/Bohrungen mit einem Profil ausgebildet sein, dass einen nicht zum Mantel 207 tangentialen Einlauf der Flüssigkeit bewirkt. In einem weiteren Beispiel können die Zuläufe 204, 205 beziehungsweise 204, 205, 208, 209 so angeordnet und ausgebildet, dass sie sich über eine gewisse Strecke in die Reaktionskammer 201 hinein erstrecken (also nicht an der inneren Mantelfläche abschließen), sodass auch hier keine tangentiale Einströmung der zu behandelnden Flüssigkeit, sondern eine zentrumsnahere Einströmung erfolgt. Sämtliche Zuläufe können zumindest zum Teil auf ein und derselben horizontalen Ebene oder zumindest zum Teil auf verschiedenen horizontalen Ebenen angeordnet sein. Die Zuläufe 204, 205 beziehungsweise 204, 205, 208, 209 können über Schläuche mit der in der Vorrichtung 200 zu behandelnden Flüssigkeit beliefert werden.

Sowohl in der Variante mit vier Zuläufen 204, 205, 208, 209, die durch die Mantelfläche 207 der Reaktionskammer 201 geführt werden, als auch in der Variante mit zwei Zuläufen 204, 205, die durch die Mantelfläche 207 der Reaktionskammer 201 geführt werden, können gemäß einer Alternative der Zufluss 210, der durch die obere Stirnfläche der Reaktionskammer 201 geführt ist, und die inneren Zuläufe 202 und 203 prinzipiell entfallen (weshalb diese in Figur 4 gestrichelt angedeutet sind). So wird eine vereinfachte Konfiguration bereitgestellt, in der jedoch im Allgemeinen weniger effizient eine dreidimensionale Wirbelströmung zum Zerstören von Mikroorganismen erzielt werden kann.

Die in den Figuren veranschaulichten Ausführungsformen der erfindungsgemäßen Vorrichtung können zylinderförmig sein, und sie können beispielsweise eine Längsausdehnung von 20 bis 100 cm und einen Durchmesser von 20 cm bis 50 cm aufweisen. Die Reaktionskammer wird als Hohlraum darin ausgebildet. Der Mantel der Reaktionskammer kann einige cm betragen und beispielsweise aus Edelstahl bestehen oder Edelstahl umfassen. Beispielsweise kann in sämtlichen Ausführungsformen die Ausdehnung des Kopfbereichs der Reaktionskammer entlang der Längsachse der Reaktionskammer im Bereich der oberen 30 oder 40 % der Längsachse liegen, und es kann die Ausdehnung des Bodenbereichs der Reaktionskammer entlang der Längsachse der Reaktionskammer im Bereich der unteren (zum Ablauf hingerichteten) 30 % oder 40 % der Längsachse liegen. Der Zwischenbereich erstreckt sich entsprechend dazwischen.

Die in den Figuren veranschaulichten Ausführungsformen der erfindungsgemäßen Vorrichtung können insbesondere in eine Warmwasserzirkulationsleitung eines Gebäudes eingebaut werden und beispielsweise an einer Wand befestigt werden. Wasser kann dann über Pumpen der Vorrichtung zur Desinfektion zugeführt werden.

## Patentansprüche

1. Vorrichtung (100, 200) zur Desinfektion einer Flüssigkeit, die umfasst:
eine um ihre Längsachse (116) rotationssymmetrische Reaktionskammer (101, 201) mit einem Kopfbereich (KB) und einem Bodenbereich (BB) und einem Zwischenbereich (ZB) zwischen dem Kopfbereich (KB) und dem Bodenbereich (BB);
einen ersten Zulauf (117), der in dem Kopfbereich (KB) mit der Reaktionskammer (101, 201) zum Einleiten einer ersten Komponente der Flüssigkeit in die Reaktionskammer (101, 201) verbunden ist;
einen zweiten Zulauf (118), der in dem Kopfbereich (KB) mit der Reaktionskammer (101, 201) zum Einleiten einer zweiten von der ersten Komponente verschiedenen Komponente der Flüssigkeit in die Reaktionskammer (101, 201) verbunden ist; und
einen Ablauf (107), der in dem Bodenbereich (BB) mit der Reaktionskammer (101, 201) zum Ausleiten der Flüssigkeit aus der Reaktionskammer (101, 201) verbunden ist;
wobei der erste Zulauf (117) und der zweite Zulauf (118) so angeordnet sind und die Reaktionskammer (101, 201) so ausgebildet ist, dass nach Einleiten der Flüssigkeit in die Reaktionskammer (101, 201) eine dreidimensionale Wirbelströmung in der Flüssigkeit innerhalb der Reaktionskammer (101, 201), insbesondere über mindestens 50 % des Volumens der Reaktionskammer (101, 201), ausgebildet wird;
und **dadurch gekennzeichnet, dass**
sich der Radius der Reaktionskammer (101, 201) in dem Zwischenbereich (ZB) gemäß einer Klothoide ändert.

2. Vorrichtung (100, 200) gemäß Patentanspruch 1, in der der Kopfbereich (KB) der Reaktionskammer (101, 201) überall einen größeren Radius als den größten Radius des Zwischenbereichs (ZB) aufweist.

3. Vorrichtung (100, 200) gemäß Patentanspruch 2, in der der Kopfbereich (KB) in seinem oberen Bereich einen nach außen hin konkaven oder flachen Bereich aufweist.

4. Vorrichtung (100, 200) gemäß einem der vorhergehenden Patentansprüche, in der sich der Radius im Bodenbereich (BB) nicht gemäß einer Klothoide ändert und sich insbesondere einer Geraden parallel zur Längsachse (116) der Reaktionskammer (101, 201) asymptotisch annähert.

5. Vorrichtung (100, 200) gemäß einem der vorhergehenden Patentansprüche, in der
der erste Zulauf (117) eine erste Zulaufmündung (109) innerhalb der Reaktionskammer (101, 201) in einer ersten Ebene senkrecht zur Längsachse (116) der Reaktionskammer (101, 201) aufweist; und
der zweite Zulauf (118) eine zweite Zulaufmündung (110) innerhalb der Reaktionskammer (101, 201) in der ersten Ebene oder in einer zweiten von der ersten Ebene verschiedenen Ebene senkrecht zur Längsachse (116) der Reaktionskammer (101, 201) aufweist.

6. Vorrichtung (100, 200) gemäß Patentanspruch 5, in der
die erste Zulaufmündung (109) von der Mantelfläche (102, 207) der Reaktionskammer (101, 201) um mehr als ein 1/20 oder 1/10 oder 1/5 des Radius der Reaktionskammer (101, 201) in der ersten Ebene beabstandet ist; und
die zweite Zulaufmündung (110) von der Mantelfläche (102, 207) der Reaktionskammer (101, 201) um mehr als ein 1/20 oder 1/10 oder 1/5 des Radius der Reaktionskammer (101, 201) in der ersten oder zweiten Ebene beabstandet ist.

7. Vorrichtung (100, 200) gemäß Patentanspruch 5 oder 6, in der die die zweite Zulaufmündung (110) in einer Richtung angeordnet ist, die der Richtung der ersten Zulaufmündung (109) entgegengesetzt ist.

8. Vorrichtung (100, 200) gemäß einem der vorhergehenden Patentansprüche, in der
die Reaktionskammer (101, 201) einen dritten und einen vierten Zulauf umfasst,
wobei der dritte Zulauf eine dritte Zulaufmündung innerhalb der Reaktionskammer (101, 201) in einer dritten Ebene senkrecht zur Längsachse (116) der Reaktionskammer (101, 201) aufweist und der vierte Zulauf eine vierte Zulaufmündung innerhalb der Reaktionskammer (101, 201) in der dritten Ebene oder in einer vierten von der dritten Ebene verschiedenen Ebene senkrecht zur Längsachse (116) der Reaktionskammer (101, 201) aufweist.

9. Vorrichtung (100, 200) gemäß Patentanspruch 8, in der der erste und zweite Zulauf (118) mit einem Zufluss (106, 210) verbunden sind, der durch die Stirnfläche der Reaktionskammer (101, 201) im Kopfbereich (KB) geführt ist, und der dritte und vierte Zulauf durch die Mantelfläche (102, 207) der Reaktionskammer (101, 201) geführt sind.

10. Vorrichtung (100, 200) gemäß Patentanspruch 8, in der der erste, zweite, dritte und vierte Zulauf durch die Mantelfläche (102, 207) der Reaktionskammer (101, 201) geführt sind und die Reaktionskammer (101, 201) einen fünften und sechsten Zulauf aufweist, wobei der fünfte und sechste Zulauf mit einem Zufluss verbunden sind, der durch die Stirnfläche der Reaktionskammer (101, 201) im Kopfbereich (KB) geführt ist.

11. Vorrichtung (100, 200) gemäß einem der vorhergehenden Patentansprüche, in der die Reaktionskammer (101, 201) keine weiteren Einbauten zur Umlenkung der Flüssigkeit, insbesondere vom Bodenbereich (BB) zum Kopfbereich (KB) der Reaktionskammer (101, 201), aufweist.

12. Verfahren zur Desinfektion einer Flüssigkeit, insbesondere Wasser, mit den Schritten:
Bereitstellen einer Vorrichtung (100, 200) gemäß einem der vorhergehenden Patentansprüche;
Einleiten der Flüssigkeit in die bereitgestellte Vorrichtung (100, 200);
Durchleiten der Flüssigkeit durch die bereitgestellte Vorrichtung (100, 200) und Ausbilden einer dreidimensionalen Wirbelströmung in der Flüssigkeit innerhalb der Reaktionskammer (101, 201); und
Ausleiten der Flüssigkeit aus der bereitgestellten Vorrichtung (100, 200).

13. Verfahren gemäß Patentanspruch 12, weiterhin mit wiederholtem Einleiten der aus der bereitgestellten Vorrichtung (100, 200) ausgeleiteten Flüssigkeit in die bereitgestellte Vorrichtung (100, 200).

14. Verfahren gemäß Anspruch 12 oder 13, weiterhin mit Anschließen der bereitgestellten Vorrichtung (100, 200) an ein Trinkwasser- oder Brauchwassernetz zum Einleiten der Flüssigkeit in die bereitgestellte Vorrichtung (100, 200) und wobei die Behandlung einer Desinfektion umfasst und die Desinfektion insbesondere die Reduktion der Anzahl von in der Flüssigkeit enthaltenen Legionellen umfasst.

## Claims

1. A device (100, 200) for disinfecting a liquid, which comprises:
a reaction chamber (101, 201) that is rotationally symmetrical about its longitudinal axis (116) and has a head region (KB) and a bottom region (BB) and an intermediate region (ZB) between the head region (KB) and the bottom region (BB);
a first inlet (117) connected to the reaction chamber (101, 201) in the head region (KB) for introducing a first component of the liquid into the reaction chamber (101, 201);
a second inlet (118) connected in the head region (KB) to the reaction chamber (101, 201) for introducing a second component of the liquid, different from the first component, into the reaction chamber (101, 201); and
a drain (107) connected to the reaction chamber (101, 201) in the bottom region (BB) for discharging the liquid from the reaction chamber (101, 201);
wherein the first inlet (117) and the second inlet (118) being arranged and the reaction chamber (101, 201) being designed such that, after the liquid has been introduced into the reaction chamber (101, 201), a three-dimensional turbulent flow is formed in the liquid within the reaction chamber (101, 201), in particular over at least 50% of the volume of the reaction chamber (101, 201);
and **characterized in that**
the radius of the reaction chamber (101, 201) changes in the intermediate region (ZB) in accordance with a clothoid.

2. The device (100, 200) according to claim 1, in which the head region (KB) of the reaction chamber (101, 201) has a larger radius than the largest radius of the intermediate region (ZB) everywhere.

3. The device (100, 200) according to claim 2, in which the head region (KB) has in its upper region an outwardly concave or flat region.

4. The device (100, 200) according to one of the preceding patent claims, in which the radius in the bottom region (BB) does not change in accordance with a clothoid and in particular asymptotically approaches a straight line parallel to the longitudinal axis (116) of the reaction chamber (101, 201).

5. The device (100, 200) according to one of the preceding patent claims, in which
the first inlet (117) has a first inlet orifice (109) within the reaction chamber (101, 201) in a first plane perpendicular to the longitudinal axis (116) of the reaction chamber (101, 201); and
the second inlet (118) has a second inlet orifice (110) within the reaction chamber (101, 201) in the first plane or in a second plane, different from the first plane, perpendicular to the longitudinal axis (116) of the reaction chamber (101, 201).

6. The device (100, 200) according to claim 5, in which
the first inlet orifice (109) is spaced from the lateral surface (102, 207) of the reaction chamber (101, 201) by more than 1/20 or 1/10 or 1/5 of the radius of the reaction chamber (101, 201) in the first plane; and
the second inlet orifice (110) is spaced from the lateral surface (102, 207) of the reaction chamber (101, 201) by more than 1/20 or 1/10 or 1/5 of the radius of the reaction chamber (101, 201) in the first or second plane.

7. The device (100, 200) according to claim 5 or 6, wherein the second inlet orifice (110) is oriented in a direction opposite to the direction of the first inlet orifice (109).

8. The device (100, 200) according to any of the preceding claims, wherein
the reaction chamber (101, 201) comprises a third and a fourth inlet,
the third inlet having a third inlet orifice within the reaction chamber (101, 201) in a third plane perpendicular to the longitudinal axis (116) of the reaction chamber (101, 201) and the fourth inlet having a fourth inlet opening within the reaction chamber (101, 201) in the third plane or in a fourth plane, different from the third plane, perpendicular to the longitudinal axis (116) of the reaction chamber (101, 201).

9. The device (100, 200) according to claim 8, in which the first and second inlets (118) are connected to an inflow (106, 210) which is guided through the end face of the reaction chamber (101, 201) in the top area (KB), and the third and fourth inlets are routed through the lateral surface (102, 207) of the reaction chamber (101, 201).

10. The device (100, 200) according to claim 8, in which the first, second, third and fourth inlets are guided through the lateral surface (102, 207) of the reaction chamber (101, 201) and the reaction chamber (101, 201) has a fifth and sixth inlet, the fifth and sixth inlet being connected to an inflow which is directed through the end face of the reaction chamber (101, 201) in the head region (KB).

11. The device (100, 200) according to one of the preceding patent claims, in which the reaction chamber (101, 201) has no further built-in components for deflecting the liquid, in particular from the bottom region (BB) to the top region (KB) of the reaction chamber (101, 201).

12. A method for disinfecting a liquid, in particular water, comprising the steps of:
providing a device (100, 200) according to one of the preceding patent claims;
introducing the liquid into the provided device (100, 200);
passing the liquid through the provided device (100, 200) and forming a three-dimensional turbulent flow in the liquid within the reaction chamber (101, 201); and
passing the liquid out of the provided device (100, 200).

13. The method according to claim 12, further comprising repeatedly introducing the liquid discharged from the provided device (100, 200) into the provided device (100, 200).

14. The method according to claim 12 or 13, further comprising connecting the provided device (100, 200) to a drinking water or process water network for introducing the liquid into the provided device (100, 200) and wherein the treatment comprises disinfection and the disinfection comprises in particular reducing the number of legionellae contained in the liquid.

## Revendications

1. Dispositif (100, 200) de désinfection d'un liquide comprenant :
une chambre de réaction (101, 201) présentant une symétrie de rotation autour de son axe longitudinal (116) et munie d'une région de tête (KB) et d'une région de fond (BB) et d'une région intermédiaire (ZB) entre la région de tête (KB) et la région de fond (BB) ;
une première arrivée (117) reliée dans la région de tête (KB) à la chambre de réaction (101, 201) et permettant d'introduire un premier composant du liquide dans la chambre de réaction (101, 201) ;
une deuxième arrivée (118) reliée dans la région de tête (KB) à la chambre de réaction (101, 201) et permettant d'introduire un deuxième composant du liquide différent du premier composant dans la chambre de réaction (101, 201) ; et
un drain (107) relié dans la région de fond (BB) à la chambre de réaction (101, 201) et permettant de faire sortir le liquide de la chambre de réaction (101, 201) ;
dans lequel la première arrivée (117) et la deuxième arrivée (118) sont agencées, et la chambre de réaction (101, 201) est conçue, de sorte qu'après l'introduction du liquide dans la chambre de réaction (101, 201) un tourbillon tridimensionnel est formé dans le liquide à l'intérieur de la chambre de réaction (101, 201), en particulier pour au moins 50 % du volume de la chambre de réaction (101, 201) ;
et **caractérisé en ce que**
le rayon de la chambre de réaction (101, 201) dans la région intermédiaire (ZB) varie en suivant une clothoïde.

2. Dispositif (100, 200) selon la revendication 1, au sein duquel la région de tête (KB) de la chambre de réaction (101, 201) présente partout un rayon supérieur au plus grand rayon de la région intermédiaire (ZB).

3. Dispositif (100, 200) selon la revendication 2, au sein duquel la région de tête (KB) présente dans sa région supérieure une région concave ou plate vers l'extérieur.

4. Dispositif (100, 200) selon l'une quelconque des revendications précédentes, au sein duquel le rayon dans la région de fond (BB) ne varie pas en suivant une clothoïde et se rapproche de manière asymptotique en particulier d'une droite parallèle à l'axe longitudinal (116) de la chambre de réaction (101, 201).

5. Dispositif (100, 200) selon l'une quelconque des revendications précédentes, au sein duquel
la première arrivée (117) présente un premier orifice d'arrivée (109) à l'intérieur de la chambre de réaction (101, 201) dans un premier plan, perpendiculairement à l'axe longitudinal (116) de la chambre de réaction (101, 201) ; et
la deuxième arrivée (118) présente un deuxième orifice d'arrivée (110) à l'intérieur de la chambre de réaction (101, 201) dans le premier plan ou dans un deuxième plan différent du premier plan, perpendiculairement à l'axe longitudinal (116) de la chambre de réaction (101, 201).

6. Dispositif (100, 200) selon la revendication 5, au sein duquel
le premier orifice d'arrivée (109) est espacé par rapport à la surface d'enveloppe (102, 207) de la chambre de réaction (101, 201) au sein du premier plan de plus de 1/20 ou 1/10 ou 1/5 du rayon de la chambre de réaction (101, 201) ; et
le deuxième orifice d'arrivée (110) est espacé par rapport à la surface d'enveloppe (102, 207) de la chambre de réaction (101, 201) au sein du premier ou du deuxième plan de plus de 1/20 ou 1/10 ou 1/5 du rayon de la chambre de réaction (101, 201).

7. Dispositif (100, 200) selon la revendication 5 ou 6, au sein duquel le deuxième orifice d'arrivée (110) est agencé dans une direction opposée à la direction du premier orifice d'arrivée (109).

8. Dispositif (100, 200) selon l'une quelconque des revendications précédentes, au sein duquel
la chambre de réaction (101, 201) comprend des troisième et quatrième arrivées,
dans lequel la troisième arrivée présente un troisième orifice d'arrivée à l'intérieur de la chambre de réaction (101, 201) dans un troisième plan, perpendiculairement à l'axe longitudinal (116) de la chambre de réaction (101, 201), et la quatrième arrivée présente un quatrième orifice d'arrivée à l'intérieur de la chambre de réaction (101, 201) dans le troisième plan ou dans un quatrième plan différent du troisième plan, perpendiculairement à l'axe longitudinal (116) de la chambre de réaction (101, 201).

9. Dispositif (100, 200) selon la revendication 8, au sein duquel les première et deuxième arrivées (118) sont reliées à une alimentation (106, 210) guidée à travers la surface frontale de la chambre de réaction (101, 201) dans la région de tête (KB), et les troisième et quatrième arrivées sont guidées à travers la surface d'enveloppe (102, 207) de la chambre de réaction (101, 201).

10. Dispositif (100, 200) selon la revendication 8, au sein duquel les première, deuxième, troisième et quatrième arrivées sont guidées à travers la surface d'enveloppe (102, 207) de la chambre de réaction (101, 201) et la chambre de réaction (101, 201) présente des cinquième et sixième arrivées, dans lequel les cinquième et sixième arrivées sont reliées à une alimentation guidée à travers la surface frontale de la chambre de réaction (101, 201) dans la région de tête (KB).

11. Dispositif (100, 200) selon l'une quelconque des revendications précédentes, au sein duquel la chambre de réaction (101, 201) ne présente pas d'installations supplémentaires permettant de dévier le liquide, en particulier depuis la région de fond (BB) jusqu'à la région de tête (KB) de la chambre de réaction (101, 201).

12. Procédé de désinfection d'un liquide, en particulier d'eau, comprenant les étapes consistant à :
fournir un dispositif (100, 200) selon l'une quelconque des revendications précédentes ;
introduire le liquide dans le dispositif (100, 200) fourni ;
faire passer le liquide à travers le dispositif (100, 200) fourni et former un tourbillon tridimensionnel dans le liquide à l'intérieur de la chambre de réaction (101, 201) ; et
faire sortir le liquide du dispositif (100, 200) fourni.

13. Procédé selon la revendication 12, comprenant en outre une étape consistant à introduire de manière répétée dans le dispositif (100, 200) fourni le liquide sorti du dispositif (100, 200) fourni.

14. Procédé selon la revendication 12 ou 13, comprenant en outre une étape consistant à raccorder le dispositif (100, 200) fourni à un réseau d'eau potable ou d'eau sanitaire afin d'introduire le liquide dans le dispositif (100, 200) fourni et dans lequel le traitement comprend une désinfection et ladite désinfection comprend en particulier une réduction du nombre de légionelles contenues dans le liquide.
